## Europäisches Patentamt
## European Patent Office
## Office européen des brevets

(19)

(11) Numéro de publication: **0 112 750 B1**

(12) **FASCICULE DE BREVET EUROPEEN**

(45) Date de publication du fascicule du brevet:
14.05.86

(51) Int. Cl.⁴: **B 60 T 13/24**

(21) Numéro de dépôt: **83402309.5**

(22) Date de dépôt: **30.11.83**

(54) **Système générateur de pression de freinage.**

(30) Priorité: **23.12.82 FR 8221685**

(43) Date de publication de la demande:
**04.07.84 Bulletin 84/27**

(45) Mention de la délivrance du brevet:
**14.05.86 Bulletin 86/20**

(84) Etats contractants désignés:
**DE GB IT**

(56) Documents cités:
**EP - A - 0 045 231**
**FR - A - 2 476 575**
**FR - A - 2 499 923**
**US - A - 2 957 454**
**US - A - 3 408 815**

(73) Titulaire: **BENDIX France, 126, rue de Stalingrad,
F-93700 Drancy (FR)**

(72) Inventeur: **Meynier, Guy, 58 rue de Reims,
F-93600 Aulnay S/Bois (FR)**

(74) Mandataire: **Le Moenner, Gabriel et al, SERVICE
BREVETS BENDIX 44, Rue François 1er, F-75008 Paris
(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

# Description

La présente invention concerne les systèmes générateurs de pression de freinage, plus particulièrement pour véhicules automobiles, du type comprenant un maître-cylindre comportant un corps de maître-cylindre renfermant au moins un piston pour au moins un circuit de freinage, un servomoteur d'assistance, avantageusement du type à dépression, associé au maître-cylindre, supporté sur une première extrémité axiale de celui-ci et comportant un boîtier divisé intérieurement en deux chambres par une structure de paroi mobile formant piston, un moyen de valve de distribution de commande du servomoteur actionné par un organe de poussée destiné à être relié à une pédale de frein, et couplé à la structure de paroi mobile, ledit moyen de valve comprenant un corps de valve déplaçable axialement et relié à la structure de paroi mobile, et au moins un organe de traction allongé reliant la structure de paroi mobile au moyen de valve et formant passage de distribution de fluide pour ce dernier.

Les systèmes générateurs de pression de freinage du type susmentionné, avec servomoteur d'assistance monté en porte à faux sur une extrémité du maître-cylindre et fournissant au piston de celui-ci un effort d'assistance *via* un organe de traction ont été développés pour obvier aux inconvénients des systèmes classiques où le maître-cylindre est monté en porte à faux sur le servomoteur qui coopère avec le piston du maître-cylindre par effet de poussée, en éliminant notamment les problèmes des forces de réaction qui transitent, dans les systèmes classiques, par les parois du boîtier du servomoteur qui doivent être dimensionnées et rigidifiées en conséquence.

Un système générateur de pression de freinage du type défini plus haut est décrit dans la demande de brevet européen EP-A-0045231. Les systèmes générateurs de pression de freinage tels que décrits dans ce document présentent l'inconvénient de mettre en œuvre une tige de poussée d'actionnement du moyen de valve et un organe de traction traversant tout deux centralement l'ensemble du maître-cylindre, suivant un agencement impliquant des coûts de fabrication et de montage élevés pour assurer une fiabilité convenable au système.

La présente invention a pour objet de proposer un système générateur de pression de freinage du type susmentionné, de structure simplifiée, notamment pour le servomoteur, de coûts de fabrication réduits et permettant notamment d'utiliser des composants de maître-cylindre conventionnels.

La présente invention a pour autre objet de proposer un système générateur de pression de freinage dont le servomoteur offre une surface active de piston optimale.

Pour ce faire, selon l'invention, le moyen de valve est agencé du côté axial du maître-cylindre opposé à ladite première extrémité et ledit corps de valve est relié à la structure de paroi mobile par au moins une paire de conduits rigides faisant respectivement communiquer le moyen de valve avec chacune des deux chambres du servomoteur.

Selon une caractéristique plus particulière de l'invention, les conduits rigides, avantageusement constitués chacun d'un tube, s'étendent à l'extérieur, radialement, du piston du maître-cylindre.

Selon une autre caractéristique de l'invention, le boîtier du servomoteur comprend une structure de paroi mobile continue en forme de disque, c'est-à-dire de forme non annulaire, et une paroi arrière continue comportant des moyens de solidarisation à ladite première extrémité du maître-cylindre, les conduits rigides traversant à coulissement étanche cette paroi arrière du servomoteur.

D'autres caractéristiques et avantages de la présente invention ressortiront de la description suivante d'un mode de réalisation particulier, donné à titre illustratif mais nullement limitatif, faite en relation avec le dessin annexé sur lequel:

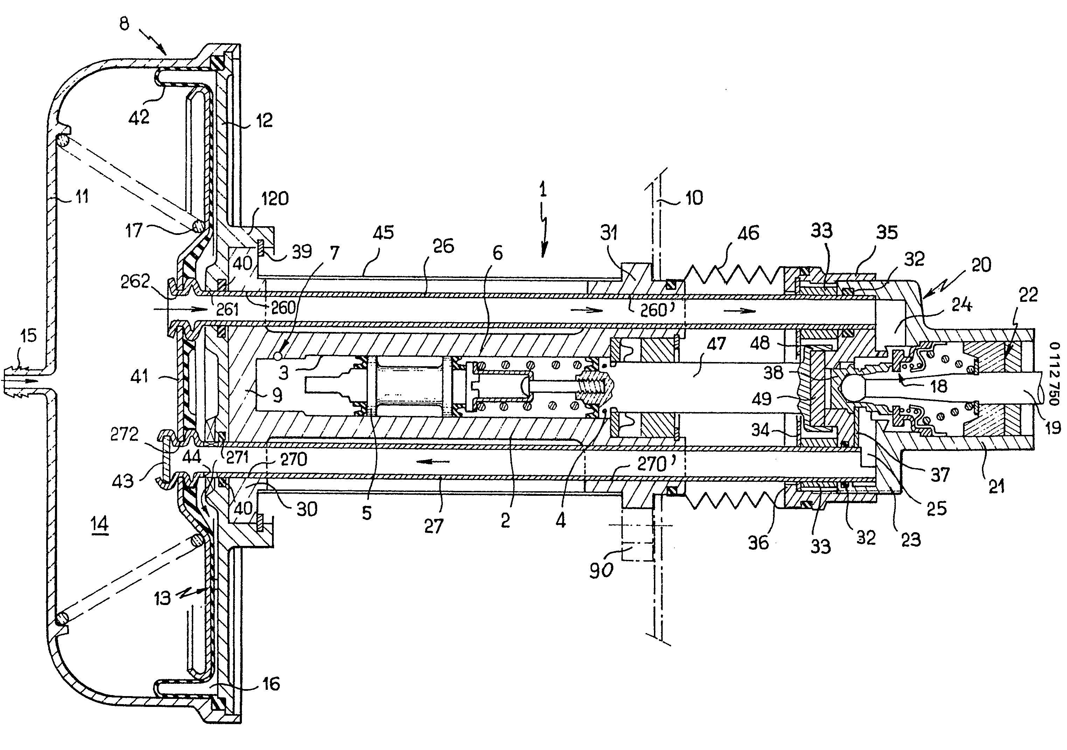

La figure 1 représente, en coupe longitudinale, un système générateur de pression de freinage selon l'invention.

Dans la description qui va suivre, les termes «avant» et «arrière» se réfèrent respectivement aux côtés gauche et droit de la figure 1 en respectant ainsi l'orientation générale d'un véhicule équipé d'un système générateur de pression de freinage selon l'invention.

Le système selon l'invention compend, de façon générale, un maître-cylindre 1 comportant un corps 2 de configuration générale cylindrique pourvu intérieurement d'un alésage axial 3 dans lequel coulisse, de façon connue en soi, au moins un piston de maître-cylindre 4, typiquement deux pistons 4 et 5 pour deux circuits de freinage connectés à des orifices 6 et 7 débouchant dans les chambres intéressées par les pistons 4 et 5. Un servomoteur d'assistance, généralement désigné par la référence 8, est monté en porte à faux sur une extrémité axiale fermée 9 du corps 2 du maître-cylindre 1, ce dernier comprenant des moyens de montage, tels qu'une collerette ou des pattes 90, de l'ensemble du système sur une paroi stationnaire 10 d'un véhicule automobile, la majeure partie du maître-cylindre 1 et le servomoteur 8 s'étendant ainsi typiquement dans le compartiment moteur du véhicule automobile.

Le servomoteur 8 comprend un boîtier constitué par l'assemblage périphérique d'une coquille avant 11 et d'une coquille arrière 12 définissant ainsi intérieurement une enceinte fermée divisée par une structure de paroi mobile axialement formant piston 13 en une chambre avant ou chambre de dépression 14, relié en permanence, par un embout 15, à une source de dépression du véhicule, et une chambre arrière ou chambre de travail 16, la structure de paroi mobile 13 étant sollicitée en direction vers la coquille arrière 12 par un ressort 17 prenant appui sur la coquille avant 11.

Le système générateur de pression de freinage comprend un moyen de valve de distribution à trois voies 18 de facture classique, telle que décrite notamment en relation avec la figure 1 de la demande de brevet FR-A-2499923 au nom de la demanderesse, commandé par une tige de poussée 19 destinée à être reliée à une pédale de frein (non représentée) du véhicule, pour établir sélectivement une communication entre la chambre arrière 16 et la chambre avant 14 ou avec l'atmosphère. Selon l'invention, le moyen de valve 18 est disposé dans un corps de valve 20, réalisé par exemple en matériau plastique, comprenant une partie arrière de diamètre réduit 21 dans laquelle s'étend la tige 19 et où sont disposés les éléments de filtrage 22 du passage de communication avec l'atmosphère du moyen de valve 18, et une partie avant de diamètre élargi 23 définissant intérieurement un premier 24 et un second 25 passage de communication des chambres du moyen de valve 18 avec la chambre de dépression avant 14 et la chambre de travail arrière 16, respectivement. Selon l'invention, le corps de valve 20 est relié à la structure de paroi mobile 13 par un premier conduit rigide 26 et par un second conduit rigide 27 sous la forme de tubes creux coulissant de façon non étanche dans des orifices axiaux 260, 260' et 270, 270' formés dans des parties de collerettes annulaires 30 et 31 formées aux extrémités axiales, respectives du corps 2 du maître-cylindre 1. De façon plus spécifique, chaque conduit 26 ou 27 est constitué d'un tube comprenant une extrémité engagée dans un orifice axial de la partie de diamètre élargi 23 du corps de valve 20 et communiquant respectivement avec le passage correspondant 24 ou 25. Dans le mode de réalisation représenté, chaque tube comprend une extrémité amincie logée dans ledit passage pourvu d'un joint d'étanchéité 32, la zone immédiatement adjacente à cette extrémité amincie étant filetée pour recevoir un écrou 33 venant en appui contre l'extrémité frontale annulaire du corps de valve 20, les écrous étant maintenus plaqués contre cette dernière par une rondelle d'appui 34 et un capuchon 35 vissé sur la périphérie filetée de la partie 23 du corps de valve 20, le capuchon comprenant un épaulement annulaire interne 36 coopérant avec la rondelle d'appui 34. On notera que l'extrémité du tube 27 est conformée pour maintenir radialement la clavette de butée 37 du plongeur 38 du moyen de valve 18 disposée dans le passage 25.

Dans le mode de réalisation représenté, la coquille arrière 12 du boîtier du servomoteur 8 se présente sous la forme d'un disque plein ou continu dont la zone centrale porte en appui contre la face frontale plane de l'extrémité 9 du corps 2 du maître-cylindre 1 et comporte des saillies s'étendant axialement vers l'extérieur 120 dans lequel sont reçus et verrouillés par une rondelle 39 des prolongements radiaux de la collerette d'extrémité 30 du corps 2 du maître-cylindre 1. En variante, l'assemblage de la paroi arrière 12 sur le maître-cylindre peut s'effectuer par des pions radiaux traversant les saillies 120 et reçus dans des orifices radiaux correspondants de la collerette 30, ou dans un montage du type à baïonnette. Selon l'invention, les tubes 26 et 27 traversent des orifices axiaux 261 et 271, respectivement, formés dans la paroi arrière 12 en regard des orifices 260 et 270, des joints d'étanchéité annulaire 40 étant prévus dans ces orifices 261 et 271. L'extrémité des tubes 26 et 27 opposée au corps de valve 20 est reçue et sertie dans des orifices 262 et 272, respectivement, formés dans le plateau 41 constituant, avec une membrane élastomère 42, la structure de paroi mobile 13. Le tube 26 communique librement en permanence avec la chambre avant à dépression 14 tandis que le tube 27 est isolé de cette dernière par un disque obturateur serti 43, ce tube 27 comportant, dans sa paroi, des orifices 44 entre l'extrémité sertie sur la structure de paroi mobile 13 et l'orifice 271 dans la paroi arrière 12 pour établir une communication permanente avec la chambre arrière de travail 16.

Avec un tel agencement, le corps de valve arrière 20 est associé en déplacement à la structure de paroi mobile 13 par les tubes 26 et 27 qui établissent respectivement la communication entre le moyen de valve 18 et les chambres 14 et 16, respectivement, ces tubes s'étendant à l'extérieur, radialement, de la partie de corps principale du maître-cylindre 1, les tubes étant protégés, au niveau du maître-cylindre, par un capotage cylindrique 45 monté entre les collerettes 30 et 31 du corps 2 du maître-cylindre 1 et, entre le corps de valve 20 et le maître-cylindre 1, par un soufflet 46 dont les extrémités sont montées sur le capuchon 35 et l'extrémité adjacente du corps 2 du maître-cylindre 1. Dans le mode de réalisation représenté, le piston primaire 4 du maître-cylindre 1 comporte un prolongement tubulaire arrière 47 comportant une coupelle arrière 48 formant logement pour un disque de réaction 49 en matériau élastomère coopérant avec le corps de valve 20 et, centralement, avec le plongeur 38, la rondelle d'appui 34 formant également butée de retenue axiale pour la coupelle 48.

Selon un aspect de l'invention, la liaison entre le corps de valve 20 et la structure de paroi mobile 13 s'effectuant uniquement par les tubes coulissants 26 et 27, cette structure de paroi mobile 13 peut se présenter sous une forme de disque continu non annulaire, de même que la paroi arrière 12 du boîtier de servomoteur, offrant ainsi, entre les deux chambres 14 et 16, une surface de piston et, partant, une force d'assistance optimales.

## Revendications

1. Système générateur de pression de freinage comprenant:

— un maître-cylindre (1) comportant un corps de maître-cylindre (2) renfermant au moins un piston (4; 5) pour au moins un circuit de freinage;

— un servomoteur d'assistance (8) associé au maître-cylindre (1), supporté sur une première extrémité axiale (9) de celui-ci et comportant un boîtier (11, 12) divisé intérieurement en deux chambres (14; 16) par une structure de paroi mobile formant piston (13);

— un moyen de valve de distribution de commande de servomoteur (18) actionné par un organe de poussée (19) destiné à être relié à une pédale de frein, et couplé à la structure de paroi mobile (13) ; ledit moyen de valve comprenant un corps de valve (20) déplaçable axialement et relié à la structure de paroi mobile (13), et

— au moins un organe de traction allongé (26; 27) reliant la structure de paroi mobile (13) au moyen de valve (18) et formant passage de distribution de fluide pour ce dernier,

caractérisé en ce que le moyen de valve (18) est agencé du côté axial du maître-cylindre (1) opposé à ladite première extrémité (9) et en ce que ledit corps de valve (20) est relié à la structure de paroi mobile (13) par au moins une paire de conduits rigides (26; 27) faisant respectivement communiquer le moyen de valve avec chacune des deux chambres (14; 16) du servomoteur (8).

2. Système selon la revendication 1, caractérisé en ce que les conduits rigides (26; 27) s'étendent à l'extérieur, radialement, du piston (4; 5) du maître-cylindre (1).

3. Système selon la revendication 1 ou la revendication 2, caractérisé en ce que le corps de maître-cylindre (2) comporte des moyens (9) de montage du système sur une structure fixe (10).

4. Système selon l'une des revendications 1 à 3, caractérisé en ce que le boîtier du servomoteur (8) comprend une structure de paroi mobile continue (13) et une paroi arrière continue (12) comportant des moyens (120) de solidarisation à ladite première extrémité (9) du corps (2) du maître-cylindre (1), les conduits rigides (26; 27) traversant à coulissement étanche (261; 271; 40) cette paroi arrière (12).

5. Système selon la revendication 4, caractérisé en ce que le corps (2) de maître-cylindre (1) comporte des moyens (30, 260, 270; 31, 260', 270') de guidage en coulissement des conduits rigides (26, 27).

6. Système selon l'une des revendications 1 à 5, caractérisé en ce que les conduits rigides sont des tubes (26, 27) ayant chacun une extrémité fixée à la structure de paroi mobile (13) de servomoteur (8).

7. Système selon l'une des revendications 1 à 6, caractérisé en ce que le moyen de valve (18, 20) inclut un organe de réaction (49).

**Patentansprüche**

1. Bremsdruck-Erzeugersystem mit:

einem Hauptzylinder (1), der einen Hauptzylinderkörper (2) mit mindestens einem Kolben (4; 5) für mindestens einen Bremskreis aufweist;

einem dem Hauptzylinder (1) zugeordneten Servomotor (8), der an einem ersten axialen Ende (9) desselben abgestützt ist und ein Gehäuse (11, 12) aufweist, das durch eine einen Kolben (13) bildende bewegliche Wand im Inneren in zwei Kammern (14; 16) unterteilt ist;

einer Steuerventileinrichtung zur Steuerung des Servomotors (18), die von einem mit einem Bremspedal verbindbaren Schubglied (19) betätigt wird und mit der beweglichen Wand (13) verbunden ist, wobei die Steuerventileinrichtung einen axial verschiebbaren und mit der beweglichen Wand (13) verbundenen Ventilkörper (20) aufweist, und

mindestens einem länglichen Zugelement (26; 27), das die bewegliche Wand (13) mit der Steuerventileinrichtung (18) verbindet und einen Steuerkanal für die letztere bildet,

dadurch gekennzeichnet, dass die Steuerventileinrichtung (18) von der dem besagten ersten Ende (9) gegenüberliegenden axialen Seite des Hauptzylinders (1) aus betätigbar ist und dass der Ventilkörper (20) mit der beweglichen Wand (13) durch mindestens ein Paar starrer Leitungen (26; 27) verbunden ist, die die Steuerventileinrichtung mit jeder der beiden Kammern (14; 16) des Servomotors (8) verbinden.

2. System nach Anspruch 1, dadurch gekennzeichnet, dass die starren Leitungen (26; 27) radial ausserhalb des Kolbens (4; 5) des Hauptzylinders (1) verlaufen.

3. System nach Anspruch 1 oder 2, dadurch gekennzeichnet, dass der Hauptzylinderkörper (2) Befestigungsmittel (9) zur Befestigung des Systems an einer ortsfesten Struktur (10) aufweist.

4. System nach einem der Ansprüche 1-3, dadurch gekennzeichnet, dass das Gehäuse des Servomotors (8) eine kontinuierliche bewegliche Wand (13) und eine kontinuierliche Rückwand (12) aufweist, die mit Mitteln (120) zur Befestigung an dem besagten ersten Ende (9) des Hauptzylinderkörpers (2) versehen ist, wobei die starren Leitungen (26; 27) sich gleitend und abgedichtet (261; 271; 40) durch diese Rückwand (12) hindurcherstrecken.

5. System nach Anspruch 4, dadurch gekennzeichnet, dass der Hauptzylinderkörper (2) Mittel (30, 260, 270; 31, 260', 270') zur gleitenden Führung der starren Leitungen (26, 27) aufweist.

6. System nach einem der Ansprüche 1-5, dadurch gekennzeichnet, dass die starren Leitungen Rohre (26, 27) sind, die jeweils mit einem Ende an der beweglichen Wand (13) des Servomotors (8) befestigt sind.

7. System nach einem der Ansprüche 1-6, dadurch gekennzeichnet, dass die Steuerventileinrichtung (18, 20) ein Reaktionnselement (49) umfasst.

**Claims**

1. Brake pressure generating system comprising:

a master cylinder (1) including a master cylinder body (2) enclosing at least one piston (4; 5) for at least one brake circuit;

a servomotor (8) associated with the master cylinder (1), which servomotor is supported at a first axial extremity (9) of the latter and comprises a casing (11, 12) interiorly divided into two chambers (14; 16) by a movable wall structure forming a piston (13); a control valve means for controlling the servomotor (18) actuated by a push member (19) adapted to be connected to a brake pedal, and connected to the movable wall structure (13), said valve means comprising a valve body (20) axially displaceable and connected to the movable wall structure (13); and at least one elongated draw member (26; 27) connecting the movable wall structure (13) to the valve means (18) and forming a fluid control passage for the latter, characterized in that the valve means (18) is actuated from the axial side of the master cylinder (1) opposite to the said first extremity (9) and in that said valve body (20) is connected to the movable wall structure (13) by at least one pair of rigid conduits (26; 27) making the valve means to communicate with each of the two chambers (14; 16) of the servomotor (8).

2. The system of claim 1, characterized in that the rigid conduits (26; 27) extend radially outside of the piston (4; 5) of the master cylinder (1).

3. The system of claim 1 or claim 2, characterized in that the master cylinder body (2) comprises means (9) for mounting the system on a fixed structure (10).

4. The system of any of claims 1 to 3, characterized in that the casing of the servomotor (8) comprises a continuous movable wall structure (13) and a continuous rear wall (12) comprising means (120) for connection to said first extremity (9) of the body (2) of the master cylinder (1), the rigid conduits (26; 27) traversing said rear wall (12) in sliding and fluid-tight manner (261; 271; 40).

5. The system of claim 4, characterized in that the body (2) of the master cylinder (1) comprises means (30, 260, 270; 31, 260', 270') for slidingly guiding the rigid conduits (26, 27).

6. The system of any of claims 1 to 5, characterized in that the rigid conduits are tubes (26, 27), each having one end fixed to the movable wall structure (13) of the servomotor (8).

7. The system of any of claims 1 to 6, characterized in that the valve means (18, 20) includes a reaction member (29).